# FASCICULE DE BREVET EUROPEEN

(11) **EP 0 880 402 B1**
(45) Date de publication et mention de la délivrance du brevet: **16.10.2002**
(21) Numéro de dépôt: 96942420.9
(22) Date de dépôt: 18.12.1996
(51) Int. Cl.: B01F 17/00, A01N 25/14

(54) **AGENT DISPERSANT A BASE DE LIGNOSULFONATE ET SON UTILISATION DANS DES FORMULATIONS PHYTOSANITAIRES SOLIDES**
LIGNOSULFONATE ENTHALTENDES DISPERGIERMITTEL UND SEINE VERWENDUNG IN FESTEN PHYTOSANITÄREN ZUSAMMENSETZUNGEN
LIGNOSULFONATE-BASED DISPERSANT AND ITS USE IN SOLID PHYTOSANITARY FORMULATIONS

(30) Priorité: 26.12.1995 FR 9515697
(43) Date de publication de la demande: 02.12.1998
(73) Titulaire: RHODIA CHIMIE, 92408 Courbevoie Cédex (FR)
(72) Inventeur: BRAMATI, Valerio, I-20020 Arese (IT); GUBELMANN-BONNEAU, Isabelle, F-78100 Saint-Germain-en-Laye (FR); MARCHETTO, Antonio, I-21047 Saronno (IT); PALLAS, Norman, Robert, Freehold, NJ07728 (US)
(74) Mandataire: Wattremez, Catherine
(86) Numéro de dépôt international: FR9602016
(87) Numéro de publication internationale: WO97024173

(56) Documents cités:
- EP-A- 0 689 866
- FR-A- 2 581 323

## Description

La présente invention a pour objet un nouvel agent dispersant pour formulations solides phytosanitaires, l'utilisation dudit agent pour la préparation de formulations phytosanitaires solides, ainsi que lesdites formulations.

Les formulations phytosanitaires solides, telles que les poudres mouillables, les granulés dispersables (WDG) ou les granulés d'épandage (GR), connaissent actuellement un large développement, car elles permettent d'éviter l'emploi de solvants potentiellement toxiques et peuvent être conditionnées dans des emballages facilement recyclables ou en sachets hydrosolubles. L'applicateur ou l'utilisateur du grand public est ainsi mieux protégé.

Ces formulations solides sont composées en général, outre de la matière active phytosanitaire, d'agents dispersants, liants, mouillants et désintégrants. Elles sont généralement obtenues par prébroyage de la matière active solide avec les différents additifs solides, avant de préparer par ajout d'eau, une dispersion concentrée, qui sera par la suite agglomérée dans un drageoir ou dans une turbosphère, ou qui sera extrudée, avant d'être séchée à l'aide d'un lit fluide, ou qui sera atomisée.

Actuellement les agents disoersants mis en oeuvre doivent être solides ; ce sont des polymères comme les lignosulfonates (sels de sodium, calcium ou ammonium), les copolymères anhydride maléique/isobutylène (sels de sodium ou d'ammonium), les acides phénylsulfoniques condensés (sels de sodium), ou encore les polymères naphtalènesulfonate/formaldéhyde condensés (sels de sodium ou d'ammonium). Cette restriction est due aux exigences de procédé, qui ne permet pas l'ajout d'additif liquide, à moins de réaliser un prémétange dans l'eau, qui sera ensuite utilisé pour la granulation.

Par conséquent, les agents tensio-actifs liquides ou visqueux à température ambiante, comme les alkylphénols éthoxylés ou les di- ou tri-styrylphénols éthoxylés, couramment utilisés comme agents dispersants en formulation liquide (en particulier dans les microémulsions, émulsions concentrées, concentrés émutsionnables ou les suspensions concentrées) ne peuvent être employés.

En ce qui concerne les granulés d'épandage, ceux-ci doivent présenter une bonne résistance à l'attrition ainsi qu'une bonne aptitude à ne pas motter durant le stockage. Par ailleurs, ces granulés doivent se désintégrer facilement au contact du sol ou des rizières, et permettre une dispersion maximale de la matière active phytosanitaire sur la surface à traiter. Par conséquent, la surface d'étalement doit être la plus grande possible.

Lorsque l'on évalue les alkylphénols ou les arylalkylphénols éthoxylés dans les formulations solides, en particulier dans les granulés dispersables ou les granulés d'épandage, outre le fait qu'ils soient difficiles à mettre en oeuvre, on constate que ce ne sont pas de bons dispersants, c'est-à-dire qu'ils conduisent à des granulés ayant une dispersabilité et une suspensivité médiocres.

Il a été trouvé que l'association d'un lignosulfonate et de certains di- ou tri-styrylphénols, éthoxylés ou etho-propoxylés, sulfatés et partiellement ou totalement neutralisés, conduit à un agent dispersant pour formulations solides phytosanitaires, et ce, avec un "rapport performances / prix" particulièrement intéressant.

En effet une synergie a été constatée entre ces deux types de dispersants, ce qui procure à leur mélange des propriétés dispersantes, pour un bon nombre de matières actives, bien supérieures à celle d'un lignosulfonate (de faible prix) pris isolément, et au moins voisines de celles des polymères dispersants les plus performants (mais onéreux) dans ce type d'application.

La présente invention a pour objet un agent dispersant pour formulations solides phytosanitaires, caractérisé en ce qu'il consiste en :
- (a) au moins un lignosulfonate de métal alcalin, alcalino-terreux ou d'ammonium [constituant (a)], associé à
- (b) au moins un di- ou tri-(phényl-1 éthyl)phénol, éthoxylé ou éventuellemnt éthopropoxyiés, sulfaté, partiellement ou totalement neutralisé [constituant (b)],
le rapport pondéral constituant (a) / constituant (b) étant d'au moins 95/5, à l'exception d'un agent dispersant comprenant du lignosulfonate de calcium et du di(phényl-1 éthyl)phénol comprenant 7 moles d'oxyde d'éthylène, sulfaté, neutralisé par de la triéthanolamine, sous forme d'un sel d'ammonium, dans un rapport pondéral de 90/10.

L'agent dispersant faisant l'objet de l'invention, peut-être préparé par mélange de ces constituants.

Il est tout particulièrement intéressant d'obtenir ce mélange sous une forme solide manipulable, notamment d'une poudre coulable. Un moyen pour obtenir une telle poudre est d'atomiser une solution aqueuse contenant les deux constituants (a) et (b).

La présente invention a donc plus particulièrement pour objet un agent dispersant en poudre, susceptible d'être obtenu par atomisation d'une solution aqueuse renfermant
- (a) au moins un lignosulfonate de métal alcalin, alcalino-terreux ou d'ammonium [constituant (a)]
- (b) et au moins un di- ou tri-(phényl-1 éthyt)phénol, éthoxylé ou éventuellement étho-propoxylé, sulfaté, partiellement ou totalement neutralisé [constituant (b)],
le rapport pondéral constituant (a) / constituant (b) étant d'au moins 95/5, en quantité correspondant à environ 40 à 60 parties en poids d'eau pour 100 parties en poids du mélange des deux constituants, à l'exception d'un agent dispersant comprenant du lignosulfonate de calcium et du di(phényl-1-éthyl)phénol comprenant 7 moles d'oxyde d'éthylène, sulfaté, neutralisé par de la triéthanolamine, sous forme d'un sel d'ammonium dans un rapport pondéral de 90/10.

Parmi les constituants (a), on peut citer les lignosulfonates de Na, K, Ca, Mg, NH₄. Selon un mode de réalisation particulier de l'invention, on utilise le lignosulfonate de sodium, ou encore le lignosutfonate de calcium.

Les constituants (b) éthoxylés présentent plus particulièrement un nombre de motifs oxyéthylène compris entre 5 et 20.

En ce- qui concernent les constituants (b) étho-propoxylés, le nombre de motifs oxyéthylène est plus particulièrement compris entre 10 et 40, et le nombre de motifs oxypropylène est plus particulièrement compris entre 5 and 10.

De préférence, les constituants (b) sont éthoxylés.

Les constituants (b) sont donc des di- ou tri-(phényl-1 éthyl)phénols, éthoxylés ou éventuellement étho-propoxylés, sulfatés, partiellement ou totalement neutralisés.

Généralement, l'opération de neutralisation est effectuée par réaction du constituant sous forme sulfatée avec une quantité appropriée d'une base. Plus particulièrement la base est choisie parmi les hydroxydes de métal alcalin, les amines ou les alcanolamines, comme l'éthanolamine, la diéthanolamine, la triéthanolamine, par exemple.

Lesdits constituants (b) partiellement ou totalement neutralisés comprennent un contre-ion qui peut être un métal alcalin, tel que le sodium ou le potassium, ou encore un ion ammonium de formule NR4⁺ dans laquelle R, identiques ou différents, représentent un atome d'hydrogène ou un radical alkyle en C₁-C₄ éventuellement substitué par un atome d'oxygène.

Parmi les constituants (b) préférés, on peut citer :
- le di-(phényl-1 éthyl)phénol éthoxylé sulfaté, partiellement ou totalement neutralisé, contenant 7 motifs oxyéthylénés,
- le di-(phényl-1 éthyl)phénol éthoxylé sulfaté, partiellement ou totalement neutralisé, contenant 5 motifs oxyéthylénés,
- le di-(phényl-1 éthyl)phénol éthoxylé sulfaté, partiellement ou totalement neutralisé, contenant 15 motifs oxyéthylénés,
- le tri-(phényl-1 éthyl)phénol éthoxylé sulfaté, partiellement ou totalement neutralisé, contenant 16 motifs oxyéthylénés.

Un exemple de combinaison de constituants (a) et (b) comprend un lignosulfonate de calcium (ex. : Bretax commercialisé par Burgo) avec un di- ou tri(phényl 1-éthyl)phénol éthoxylé, sulfaté neutralisé, sous forme d'un sel d'ammonium (ex. Soprophor® 4D384 commercialisé par Rhône-Poulenc) dans un rapport 90/10. Le sel d'ammonium est plus particulièrement neutralisé par de la diéthanotamine.

Un autre exemple de combinaison de constituants (a) et (b) comprend un lignosulfonate de sodium (ex. : Reax 88B commercialisé par Westvaco) avec un di- ou tri- (phényl 1 éthyl) phénol éthoxylé, sulfaté neutralisé, sous forme d'un sel d'ammonium (ex. : le Soprophor® 4D384 commercialisé par Rhône-Poulenc) dans un rapport 70/30. Le Soprophor 4D384 est un tri- (phényl 1 éthyl) phénol éthoxylé, sulfaté neutralisé, sous forme d'un sel d'ammonium avec 16 moles d'oxyéthylène. Le pH peut être ajusté à environ 6 avant la co-atomisation des composés.

Ainsi que cela a été indiqué auparavant, le rapport pondéral constituant (a) / constituant (b) est d'au plus 95/5.

Plus particulièrement, ledit rapport pondéral est compris entre 95/5 et 50/50. De préférence, le rapport pondéral est compris entre 95/5 et 70/30. Selon un mode de réalisation encore plus préférentiel, le rapport pondéral est compris entre 90/10 et 75/25.

L'opération d'atomisation peut être réalisée dans un atomiseur selon les techniques bien connues de l'homme de l'art ; la température de l'air à l'entrée se situe généralement vers 150-300°C, et celle à la sortie vers 80-100°C.

L'agent dispersant, faisant l'objet de l'invention, est tout particulièrement bien adapté à la préparation de granulés pesticides (herbicides, insecticides, fongicides), puisqu'il se présente préférentiellement sous forme d'une poudre coulable.

Un autre objet de l'invention consiste en des formulations phytosanitaires solides, notamment sous forme de granulés, à base d'une matière active phytosanitaire solide et de l'agent dispersant ci-dessus décrit.

Lesdites formulations solides phytosanitaires sont favorablement constituées :
- de 40 à 90% en poids de matière active phytosanitaire,
- de 0,1 à 20% en poids de l'agent dispersant faisant l'objet de l'invention,
- de 0 à 10% en poids d'au moins un agent désintégrant et/ou liant,
- de 0 à 10% en poids d'au moins un agent anti-mottant,
- de 0 à 10% en poids d'au moins un agent stabilisant chimique,
- de 0 à 5 % en poids d'au moins un agent mouillant,
- de 0 à 50 % en poids de charges inertes,
par rapport au poids total de formulation solide, à l'exception de formulation phytosanitaire comprenant 87 % en poids de DIURON, 10 % en poids d'un mélange de lignosulfonate de calcium et de et de di(phényl-1 éthyl)phénol comprenant 7 moles d'oxyde d'éthylène, sulfaté, neutralisé par de la triéthanolamine, sous forme d'un sel d'ammonium, dans un rapport pondéral de 90/10, 1 % en poids d'alcool gras en C₉-C₁₁ étho-propoxylé présentant un indice d'hydroxyle compris entre 107-117, 2 % en poids de kaolin et 3 % en poids d'amidon, (Soprophor® DSS-7N, dans un rapport pondéral de 90/10, 1 % en poids d'Antarox® BO/327, 2 % en poids de kaolin et 3 % en poids d'amidon).

Parmi les matières actives pouvant être présentes dans lesdites formulations, on peut citer les suivantes, seules ou en combinaison :

| | | | |
|---|---|---|---|
| DIURON | LINURON | NEBURON | CARBARYL |
| ATRAZINE | AMETRYN | CARBOXIN | FENTIN ACETATE |
| ZIRAM | MANEB | ZINEB | CARBENDAZIM |
| CHLOROTHALONIL | MANCOZEB | oxychlorure de cuivre | |

A titre d'exemple, on peut mentionner en tant que :
- agent mouillant: les agents anioniques tels que alkylnaphtalène sulfonates, alkylbenzènes sulfonates, alkylsulfosuccinates, taurates, alkylsulfates, ... ou non-ioniques tels que les diols acétyléniques, les alkylphénols éthoxylés ...
- agent désintégrant et/ou liant : l'amidon, les polyvinylpyrrolidones réticulées, la cellulose microcristalline, la carboxyméthylcellulose de sodium réticulée, les polysaccharides du soja, les résines échangeuses d'ions, les copolymères oxyde d'éthylène/oxyde de propylène, l'aicool polyvinytique ...
- agent anti-mottant : les phosphates d'ammonium ou de sodium, le carbonate ou bicarbonate de sodium, l'acétate de sodium, le métasilicate de sodium, les sulfates de magnésium, zinc ou calcium, l'hydroxyde de magnésium, le chlorure de calcium, les tamis moléculaires, les alkylsulfosuccinates de sodium, les oxydes de baryum ou de calcium, la silice ...
- agent stabilisant chimique : les sulfates de métaux alcalino-terreux ou de transition, l'hexamétaphosphate de sodium, le chlorure de calcium, l'anhydride borique ...,
- charges inertes : les argiles, les silices synthétiques et de diatomées, les silicates de calcium ou magnésium, le dioxyde de titane, les oxydes d'aluminium, zinc ou calcium, les carbonates de calcium ou de magnésium, les sulfates de sodium, ammonium, calcium, le noir de carbone ...

Lesdites formulations peuvent être obtenues par mélange de ces constituants, broyage à sec dudit mélange, agglomération par ajout d'eau aux particules broyées, extrusion ou granulation, puis séchage à l'aide d'un lit fluide jusqu'à obtenir des granulés présentant une humidité résiduelle de l'ordre de 0,1 à 2% en poids.

A titre indicatif, la durée du séchage varie entre 20 et 90 minutes et plus précisément entre 20 et 40 minutes.

La température de séchage est habituellement comprise entre 40 et 100°C et de préférence entre 50 et 70°C.

Pour une bonne réalisation de l'invention, l'agglomération des particules broyées est réalisée par ajout d'environ 10 à 20% en poids d'eau par rapport au poids de particules ; l'opération d'extrusion ou de granulation est réalisée selon des techniques bien connues de l'homme de l'art, par exemple extrusion à travers une filière, une grille ..., granulation à l'aide d'un drageoir, d'une turbosphère ...

Un autre objet de la présente invention consiste en un autre type de formulations phytosanitaires solides comprenant :
- de 5 à 50% en poids de matière active phytosanitaire,
- de 0,1 à 5% en poids de l'agent dispersant faisant l'objet de l'invention,
- de 20 à 90% en poids d'au moins un additif minéral,
- de 0 à 5 % en poids d'au moins un agent mouillant,
par rapport au poids total de formulation solide.

De telles formulations correspondent plus particulièrement à des granulés d'épandage (GR).

La teneur en agent dispersant selon l'invention peut varier plus particulièrement entre 0,5 et 3% en poids.

Parmi les matières phytosanitaires solides convenables, on peut citer à titre d'exemple les suivantes :

| | | | |
|---|---|---|---|
| CARBARYL | BENDIOCARB | BENFURACARB | CARBOSULFAN |
| CARBOFURAN | CLORPROPHAM | FURATHIOCARB | ISOPROCARB |
| PROPHAM | ACLONIFEN | OXYFLUORFEN | MCPA-THIOETHYL |
| 2,4-D, MCPB | METALAXYL | ATRAZINE | |

Celles-ci peuvent être employées seules ou en mélange.

Parmi les additifs minéraux convenables, on peut citer sans intention de se limiter, le carbonate de calcium, le kaolin, le talc, la silice, l'argile, la bentonite.

Lesdites formulations phytosanitaires peuvent comprendre en outre de 0 à 20% en poids par rapport au poids total de formulation, d'additifs employés classiquement dans le domaine.

Ainsi, ces formulations peuvent comprendre des agents liants comme par exemple l'amidon, l'alcool polyvinylique, la carboxyméthylcellulose, la cellulose monocristalline.

Ces formulations peuvent en outre comprendre au moins un agent anti-mottant comme le carbonate ou bicarbonate de sodium, le chlorure de calcium, les tamis moléculaires, la silice, par exemple.

Par ailleurs, les formulations selon la présente invention peuvent comprendre des agents désintégrants tels que, par exemple, les phosphates d'ammonium ou de sodium, l'acétate de sodium, les sulfates de sodium, magnésium, zinc ou calcium.

Il peut être en outre avantageux d'inclure des agents stabilisants chimiques tels que notamment l'hexamétaphosphate de sodium, les citrates de métaux alcalins ou alcalino-terreux.

Ce type de formulation peut être obtenu en mettant en oeuvre des méthodes connues.

Ainsi, les divers éléments constitutifs de la formulation sont mis en contact, dans un ordre différent, simultanément ou successivement, dans un mélangeur à poudre, de type LÖDIGE® par exemple.

Puis on ajoute 2 à 45% en poids d'eau par rapport au poids des éléments constitutifs de la formulation phytosanitaire, plus particulièrement 10 à 25%, afin de granuler le mélange.

Une telle opération est classiquement mise en oeuvre dans un drageoir, une turbosphère par exemple.

Il est de même envisageable d'extruder le mélange humidifié à travers une filière ou encore une grille.

Il est à noter que l'agent dispersant peut être incorporé sous forme solide, ou avec l'eau de l'étape de granulation, sous la forme d'une suspension ou d'une solution aqueuse.

Une fois le mélange mis en forme, on effectue un séchage à l'aide d'un lit fluide jusqu'à obtenir des granulés présentant une humidité résiduelle inférieure à 2% en poids.

A titre indicatif, la durée du séchage varie entre 20 et 90 minutes et plus précisément entre 20 et 40 minutes.

La température de séchage est habituellement comprise entre 40 et 100°C et de préférence entre 50 et 70°C.

L'exemple suivant est donné à titre illustratif.

### Exemple

### Préparation de l'agent dispersant

On introduit un mélange constitué de
- 90 parties en poids de lignosulfonate de calcium,
- et 10 parties en poids de tri-(phényl-1 éthyl)phénol éthoxylé sulfaté neutralisé, contenant 16 motifs oxyéthylénés,
dans 100 parties d'eau.
La solution obtenue est introduite dans un atomiseur avec un débit de 5l/h, la température de l'air à l'entrée est de 300°C, celle à la sortie de l'ordre de 90-100°C.
On obtient une poudre coulable.

### Préparation de la formulation phytosanitaire

On prépare un mélange contenant :
· CARBARYL 10 parties en poids
· Agent dispersant préparé ci-desus 2 parties en poids
· Agent mouillant : laurylsulfate de sodium 1 parties en poids
· Additif minéral : carbonate de calcium 87 parties en poids
Ce mélange solide est broyé à sec dans un broyeur à jet d'air; on obtient des particules de l'ordre de 1 à 20 µm.

Les particules sont ensuite agglomérées à l'aide de 40 parties d'eau pour 100 parties de particules dans un appareil de type LÖDIGE®.
L'agglomérat est alors extrudé à travers une filière de 0,8 mm de diamètre.
Les granulés sont ensuite séchés dans un lit fluide AEROMATIC® (NIRO) jusqu'à réduire l'humidité résiduelle à 2%.

### Propriétés des granulés :

Les conditions de ce test d'application sont les suivantes :
Dans un cristallisoir (15 cm de diamètre), rempli d'eau sur une profondeur de 1 cm ; on verse délicatement 1 gramme de granulés au centre du cristallisoir à la surface de l'eau.
Le diamètre du spot d'étalement couvert par la dispersion resultant du délitage des granulés est mesuré en fonction du temps et la superficie correspondante est calculée.

| Dureté de l'eau | Surface d'étalement au délitage (cm²) | | |
|---|---|---|---|
| | 10 min | 30 min | 60 mn |
| 20 ppm | 143 | 143 | 143 |
| 60 ppm | 143 | 143 | 143 |
| 342 ppm | 143 | 143 | 143 |

## Revendications

1. Agent dispersant pour formulations solides phytosanitaires, **caractérisé en ce qu'**il consiste en :
- (a) au moins un lignosulfonate de métal alcalin, alcalino-terreux ou d'ammonium comme constituant (a), associé à
- (b) au moins un di- ou tri-(phényl-1 éthyl)phénol, éthoxylé ou éventuellement étho-propoxylé, sulfaté, partiellement ou totalement neutralisé comme constituant (b),
le rapport pondéral constituant (a) / constituant (b) étant d'au plus 95/5, à l'exception d'un agent dispersant comprenant du lignosulfonate de calcium et du di(phényl-1 éthyl)phénol comprenant 7 moles d'oxyde d'éthylène, sulfaté, neutralisé par de la triéthanolamine, sous forme d'un sel d'ammonium, dans un rapport pondéral de 90/10.

2. Agent dispersant en poudre selon la revendication précédente, **caractérisé en ce qu'**il est susceptible d'être obtenu par atomisation d'une solution aqueuse renfermant :
- (a) au moins un lignosulfonate de métal alcalin, alcalino-terreux ou d'ammonium comme constituant (a)
- (b) et au moins un di- ou tri-(phényl-1 étnyl)phénol, éthoxylé ou éventuellement étho-propoxylé, sulfaté, partiellement ou totalement neutralisé comme constituant (b),
le rapport pondéral constituant (a) / constituant (b) étant d'au plus 95/5, en quantité correspondant à environ 40 à 60 parties en poids d'eau pour 100 parties en poids du mélange des deux constituants, à l'exception d'un agent dispersant comprenant du lignosulfonate de calcium et du di(phényl-1 éthyl)phénol comprenant 7 moles d'oxyde d'éthylène, sulfaté, neutralisé par de la triéthanolamine, sous forme d'un sel d'ammonium, dans un rapport pondéral de 90/10.

3. Agent dispersant selon l'une quelconque des revendications 1 ou 2, **caractérisé en ce que** le constituant (a) est du lignosulfonate de sodium ou de lignosulfonate de calcium.

4. Agent dispersant selon l'une des revendications 1 à 3, **caractérisé en ce que** le rapport pondéral constituant (a) / constituant (b) est compris entre 95/5 et 50/50.

5. Agent dispersant selon l'une des revendications 1 à 4, **caractérisé en ce que** le rapport pondéral constituant (a) / constituant (b) est compris entre 95/5 et 70/30.

6. Agent dispersant selon l'une des revendications 1 à 5, **caractérisé en ce que** le rapport pondéral constituant (a) / constituant (b) est compris entre 90/10 et 75/25.

7. Agent dispersant selon l'une des revendications 1 à 6, **caractérisé en ce que** le constituant (b) est choisi parmi :
- le di-(phényl-1 éthyl)phénol éthoxylé sulfaté, partiellement ou totalement neutralisé, contenant 7 motifs oxyéthylénés,
- le di-(phényl-1 éthyl)phénol éthoxylé sulfaté, partiellement ou totalement neutralisé, contenant 5 motifs oxyéthylénés,
- le di-(phényl-1 éthyl)phénol éthoxylé sulfaté, partiellement ou totalement neutralisé, contenant 15 motifs oxyéthylénés,
- le tri-(phényl-1 éthyl)phénol éthoxylé sulfaté, partiellement ou totalement neutralisé, contenant 16 motifs oxyéthylénés.

8. Utilisation de l'agent dispersant faisant l'objet de l'une des revendications 1 à 7 pour la préparation de formulations phytosanitaires solides.

9. Formulations phytosanitaires solides à base d'une matière active phytosanitaire solide et de l'agent dispersant faisant l'objet de l'une des revendications 1 à 7.

10. Formulations phytosanitaires solides selon la revendication 9, **caractérisées en ce qu'**elles sont constituées de :
· de 40 à 90% en poids de matière active phytosanitaire,
· de 0,1 à 20% en poids d'agent dispersant selon l'une quelconque des revendications 1 à 7,
· de 0 à 10% en poids d'au moins un agent désintégrant et/ou liant,
· de 0 à 10% en poids d'au moins un agent anti-mottant,
· de 0 à 10% en poids d'au moins un agent stabilisant chimique,
· de 0 à 5 % en poids d'au moins un agent mouillant,
· de 0 à 50% en poids de charges inertes,
par rapport au poids de formulation solide ;
à l'exception de formulations phytosanitaires comprenant 87 % en poids de DIURON, 10 % en poids d'un mélange de lignosulfonate de calcium et de di(phényl-1 éthyl)phénol comprenant 7 moles d'oxyde d'éthylène, sulfaté, neutralisé par de la triéthanolamine, sous forme d'un sel d'ammonium, dans un rapport pondéral de 90/10, 1 % en poids d'alcool gras en C₉-C₁₁ étho-propoxylé présentant un indice d'hydroxyle compris entre 107-117, 2 % en poids de kaolin et 3 % en poids d'amidon.

11. Formulations phytosanitaires solides selon la revendication 9, **caractérisées en ce qu'**elles comprennent :
· de 5 à 50% en poids de matière active phytosanitaire,
· de 0,1 à 5% en poids d'agent dispersant selon l'une quelconque des revendications 1 à 7,
· de 20 à 90% en poids d'au moins un additif minéral,
· de 0 à 5 % en poids d'au moins un agent mouillant,
par rapport au poids de formulation solide

## Patentansprüche

1. Dispergiermittel für feste Pflanzenschutzformulierungen
**dadurch gekennzeichnet, daß** es aus
(a) mindestens einem Alkalimetall-, Erdalkalimetall oder Ammoniumlignosulfonat als Bestandteil (a) zusammen mit
(b) mindestens einem teilweise oder vollständig neutralisierten, sulfatierten, ethoxylierten oder gegebenenfalls ethopropoxylierten Di- oder Tri-(1-phenylethyl)-phenol als Bestandteil (b)
besteht, wobei das Gewichtsverhältnis von Bestandteil (a) / Bestandteil (b) höchstens 95/5 beträgt, ausgenommen ein Dispergiermittel, das Calciumlignosulfonat und mit Triethanolamin neutralisiertes, sulfatiertes Di-(1-phenylethyl)-phenol mit 7 mol Ethylenoxid in Form eines Amoniumsalzes in einem Gewichtsverhältnis von 90/10 umfaßt.

2. Dispergiermittel in Pulverform nach dem vorhergehenden Anspruch, **dadurch gekennzeichnet, daß** es durch Zerstäuben einer wäßrigen Lösung erhältlich ist, die
(a) mindestens ein Alkalimetall-, Erdalkalimetall oder Ammoniumlignosulfonat als Bestandteil (a) und
(b) mindestens ein teilweise oder vollständig neutralisiertes, sulfatiertes, ethoxyliertes oder gegebenenfalls ethopropoxyliertes Di- oder Tri-(1-phenylethyl)-phenol als Bestandteil (b),
wobei das Gewichtsverhältnis von Bestandteil (a) / Bestandteil (b) höchstens 95/5 beträgt, in einer Menge entsprechend etwa 40 bis 60 Gewichtsteilen Wasser auf 100 Gewichtsteile der Mischung der beiden Bestandteile umfaßt, ausgenommen ein Dispergiermittel, das Calciumlignosulfonat und mit Triethanolamin neutralisiertes, sulfatiertes Di-(1-phenylethyl)-phenol mit 7 mol Ethylenoxid in Form eines Amoniumsalzes in einem Gewichtsverhältnis von 90/10 umfaßt.

3. Dispergiermittel nach Anspruch 1 oder 2, **dadurch gekennzeichnet, daß** der Bestandteil (a) Natriumlignosulfonat oder Calciumlignosulfonat ist.

4. Dispergiermittel nach einem der Ansprüche 1 bis 3, **dadurch gekennzeichnet, daß** das Gewichtsverhältnis von Bestandteil (a) / Bestandteil (b) zwischen 95/5 und 50/50 liegt.

5. Dispergiermittel nach einem der Ansprüche 1 bis 4, **dadurch gekennzeichnet, daß** das Gewichtsverhältnis Bestandteil (a) / Bestandteil (b) zwischen 95/5 und 70/30 liegt.

6. Dispergiermittel nach einem der Ansprüche 1 bis 5, **dadurch gekennzeichnet, daß** das Gewichtsverhältnis von Bestandteil (a) / Bestandteil (b) zwischen 90/10 und 75/25 liegt.

7. Dispergiermittel nach einem der Ansprüche 1 bis 6, **dadurch gekennzeichnet, daß** der Bestandteil (b) ausgewählt ist aus:
- teilweise oder vollständig neutralisiertem, sulfatiertem ethoxyliertem Di-(1-phenylethyl)-phenol mit 7 Oxyethyleneinheiten,
- teilweise oder vollständig neutralisiertem, sulfatiertem ethoxyliertem Di-(1-phenylethyl)-phenol mit 5 Oxyethyleneinheiten,
- teilweise oder vollständig neutralisiertem, sulfatiertem ethoxyliertem Di-(1-phylethyl)-phenol mit 15 Oxyethyleneinheiten und
- teilweise oder vollständig neutralisiertem, sulfatiertem ethoxyliertem Tri-(1-phenylethyl)-phenol mit 16 Oxyethyleneinheiten.

8. Verwendung des Dispergiermittels nach einem der Ansprüche 1 bis 7 zur Herstellung von festen Pflanzenschutzformulierungen.

9. Feste Pflanzenschutzformulierungen auf Basis eines festen Pflanzenschutzwirkstoffs und eines Dispergiermittels nach einem der Ansprüche 1 bis 7.

10. Feste Pflanzenschutzformulierungen nach Anspruch 9, **dadurch gekennzeichnet, daß** sie aus
- 40 bis 90 Gew.-% eines Pflanzenschutzwirkstoffs,
- 0,1 bis 20 Gew.-% eines Dispergiermittels nach einem der Ansprüche 1 bis 7,
- 0 bis 10 Gew.-% mindestens eines Entmischungs- und/oder Bindemittels,
- 0 bis 10 Gew.-% mindestens eines klumpenverhindernden Mittels,
- 0 bis 10 Gew.-% mindestens eines chemischen Stabilisierungsmittels,
- 0 bis 5 Gew.-% mindestens eines Netzmittels,
- 0 bis 50 Gew.-% inerter Füllstoffe,
bezogen auf das Gewicht der festen Formulierung, bestehen,
ausgenommen Pflanzenschutzformulierungen, die 87 Gew.-% DIURON, 10 Gew.-% einer Mischung aus Calciumlignosulfonat und mit Triethanolₐₘᵢₙₑ neutralisiertem, sulfatiertem Di-(1-phenylethyl)-phenol mit 7 mol Ethylenoxid in Form eines Ammoniumsalzes in einem Gewichtsverhältnis von 90/10, 1 Gew.-% ethopropoxylierten C₉-C₁₁-Fettalkohol mit einer Hydroxylzahl zwischen 107 und 117, 2 Gew.-% Kaolin und 3 Gew.-% Stärke enthalten.

11. Feste Pflanzenschutzformulierungen nach Anspruch 9, **dadurch gekennzeichnet, daß** sie enthalten:
- 5 bis 50 Gew.-% eines Pflanzenschutzwirkstoffs,
- 0,1 bis 5 Gew.-% eines Dispergiermittels nach einem der Ansprüche 1 bis 7,
- 20 bis 90 Gew.-% mindestens eines anorganischen Additivs und
- 0 bis 5 Gew.-% mindestens eines Netzmittels,
bezogen auf das Gewicht der festen Formulierung.

## Claims

1. A dispersing agent for solid plant protective formulations, **characterized in that** it consists of:
(a) at least one alkali metal, alkaline-earth metal or ammonium lignosulphonate as constituent (a), associated with:
(b) at least one partially or completely neutralised, sulphated, ethoxylated or optionally ethopropoxylated di- or tri-(1-phenylethyl)phenol, , as constituent (b);
the constituent (a)/constituent (b) weight ratio being at most 95/5, with the exception of a dispersing agent comprising calcium lignosulphonate and sulphated di-(1-phenylethyl)phenol containing 7 moles of ethylene oxide, neutralised with triethanolamine, in the form of an ammonium salt, in a weight ratio of 90/10.

2. A dispersing agent in powder form according to the preceding claim, **characterized in that** it can be obtained by spray drying an aqueous solution comprising:
(a) at least one alkali metal, alkaline-earth metal or ammonium lignosulphonate as constituent (a);
(b) and at least one partially or completely neutralised, sulphated, ethoxylated or optionally ethopropoxylated di- or tri-(1-phenylethyl)phenol, as constituent (b);
the constituent (a)/constituent (b) weight ratio being at most 95/5, in a quantity corresponding to about 40 to 60 parts by weight of water per 100 parts by weight of the mixture of the two constituents, with the exception of a dispersing agent comprising calcium lignosulphonate and sulphated di-(1-phenylethyl)phenol containing 7 moles of ethylene oxide, neutralised with triethanolamine, in the form of an ammonium salt, in a weight ratio of 90/10.

3. A dispersing agent according to claim 1 or claim 2, **characterized in that** constituent (a) is sodium lignosulphonate or calcium lignosulphonate.

4. A dispersing agent according to one of claims 1 to 3, **characterized in that** the constituent (a)/constituent (b) weight ratio is in the range 95/5 to 50/50.

5. A dispersing agent according to one of claims 1 to 4, **characterized in that** the constituent (a)/constituent (b) weight ratio is in the range 95/5 to 70/30.

6. A dispersing agent according to one of claims 1 to 5, **characterized in that** the constituent (a)/constituent (b) weight ratio is in the range 90/10 to 75/25.

7. A dispersing agent according to one of claims 1 to 6, **characterized in that** constituent (b) is selected from:
• partially or completely neutralised, sulphated, ethoxylated di-(1-phenylethyl)phenol containing 7 oxyethylenated motifs;
• partially or completely neutralised, sulphated, ethoxylated di-(1-phenylethyl)phenol containing 5 oxyethylenated motifs;
• partially or completely neutralised, sulphated, ethoxylated di-(1-phenylethyl)phenol containing 15 oxyethylenated motifs;
• partially or completely neutralised, sulphated, ethoxylated tri-(1-phenylethyl)phenol containing 16 oxyethylenated motifs.

8. Use of the dispersing agent according to one of claims 1 to 7 for the preparation of solid plant protective formulations.

9. Solid plant protective formulations based on a solid plant protective active ingredient and a dispersing agent according to one of claims 1 to 7.

10. Solid plant protective formulations according to claim 9, **characterized in that** they are constituted by:
• 40% to 90% by weight of plant protective active ingredient;
• 0.1% to 20% by weight of a dispersing agent according to any one of claims 1 to 7;
• 0 to 10% by weight of at least one disintegrating agent and/or binder;
• 0 to 10% by weight of at least one anti-clumping agent;
• 0 to 10% by weight of at least one chemical stabilising agent;
• 0 to 5% by weight of at least one wetting agent;
• 0 to 50% by weight of inert fillers;
with respect to the weight of solid formulations;
with the exception of plant protective formulations comprising 87% by weight of DIURON, 10% by weight of a mixture of calcium lignosulphonate and sulphated, di(1-phenylethyl)phenol containing 7 moles of ethylene oxide, neutralised with triethanolamine, in the form of an ammonium salt, in a weight ratio of 90/10, 1% by weight of an etho-propoxylated C₉-C₁₁ fatty alcohol with a hydroxyl index in the range 107-117, 2% by weight of kaolin and 3% by weight of starch.

11. Solid plant protective formulations according to claim 9, **characterized in that** they comprise:
• 5% to 50% by weight of plant protective active ingredient;
• 0.1% to 5% by weight of a dispersing agent according to any one of claims 1 to 7;
• 20% to 90% by weight of at least one mineral additive;
• 0 to 5% by weight of at least one wetting agent;
with respect to the weight of solid formulations.
